# EUROPEAN PATENT APPLICATION

(11) **EP 3 585 096 A1**
(43) Date of publication of application: **25.12.2019**
(21) Application number: 17896663.6
(22) Date of filing: 28.12.2017
(51) Int. Cl.: H04W 28/26

(54) **RESOURCE RESERVATION PROCESSING METHOD FOR SRVCC SWITCH AND ACCESS SWITCH FUNCTION DEVICE**

(30) Priority: 14.02.2017 CN 201710079346
(71) Applicant: ZTE Corporation, Shenzhen, Guangdong 518057 (CN)
(72) Inventor: TU, Qiang, Shenzhen, Guangdong 518057 (CN); CHENG, Wanli, Shenzhen, Guangdong 518057 (CN); ZHANG, Xianhong, Shenzhen, Guangdong 518057 (CN)
(74) Representative: Rosenberg, Muriel Sylvie
(86) International application number: PCT/CN2017/119363
(87) International publication number: WO 2018/149235

(57) **Abstract**

A resource reservation processing method for single radio voice call continuity switch includes: receiving, by an access switch function device, which is an access transfer control function device or an emergency access transfer function device, a single radio voice call continuity switch request, the the single radio voice call continuity switch request including resource reservation information; and performing, by the access switch function device, resource reservation processing when determining that resource reservation processing is required according to the resource reservation information.

## Description

### FIELD OF THE INVENTION

The present disclosure relates to, but is not limited to, the field of communications, and in particular, to a resource reservation processing method for SRVCC (Single Radio Voice Call Continuity) switch and an access switch function device.

### BACKGROUND

The Single Radio Voice Call Continuity (SRVCC) solution is a consecutive scheme based on Voice over Long Term Evolution (VOLTE) service proposed by the 3rd Generation Partnership Project (3GPP), which is substantially used to solve how to ensure a continuity of voice calls when a single-frequency User Equipment (UE) moves between a Long Term Evolution (LTE)/traditional long-term evolution (Pre-LTE) network and a Second Generation (2G)/3rd Generation (3G) Circuit Switch (CS) network, that is, to ensure a smooth switch of the single-frequency UE between Voice over IP (VOIP) voice under control of IP Multimedia Subsystem (IMS) and CS domain voice. In the initial stage of LTE network construction, it has a limited coverage. When a user moves into an area where an LTE signal is weak but GSM EDGE radio access network (Global System for Mobile communications Enhanced Data Rate for GSM Evolution radio access network, GERAN)/Universal Mobile Telecommunication System Radio Access Network (UTRAN) has an excellent network signal coverage during the use of the LTE network for a voice call, it is necessary to switch a talk routing from the LTE to the GERAN/UTRAN to ensure Voice Call Continuity (VCC).

A VoLTE voice call of Enhanced Single Radio Voice Call Continuity (eSRVCC) switch defined by 3GPP R10 allows for a voice smooth evolution during 4G network upgrade, improves handover speed, and provides with end-to-end voice quality assurance for the VoLTE call. Compared with the SRVCC technology in 3GPP R8, the eSRVCC technology can effectively shorten the media delay of voice switch and improve the user experience. The difference between eSRVCC and SRVCC is that the former adds a pair of functional entity devices in the IMS system: Access Transfer Control Functionality (ATCF) device and Access Transfer Gateway (ATGW), as anchor points of the VoIP call at a control plane and a user plane, respectively.

Resource reservation (Precondition) refers to a process of establishing a media PDP (Packet Data Protocol) context. In a mobile communication network, the transmission of media streams between UEs is based on the PDP context. For the UEs of both parties, the execution process of establishing the PDP context is independent of each other. The establishment of the media PDP context may take some time or even fail. This means that there is no guarantee that the negotiated media session may be established until the resource is successfully reserved. Therefore, the role of resource reservation is generally to ensure that a called party should not ring before successful reservation of both local and calling party's resource is confirmed, so as to significantly reduce the situation in which the called party rings but fails to answer the call.

In the specifications of rfc3312, TS 24.292, 3GPP TS 23.237 and 3GPP TS 24.237, there are already signaling and procedures for switching between Packet Switched (PS) and Circuit Switching Domain (CS) by using ATCF/EATF.

### SUMMARY

The following is a summary of the subject matter specifically described herein. This Summary is not intended to limit the scope of the claims.

In the relevant protocols, only the SCCAS (Service Continuity Control Application Server) and the MSC (Mobile Switching Center) are proposed to process resource reservation of a switch call, and the ATCF device/EATF (Emergency Access Transfer Function) device is not required to process the switch call carrying resource reservation information according to the requirement of resource reservation. However, if the resource reservation is processed by the SCCAS as proposed, the ATCF will need to transparently transmit a switch request and a flow switching process for eSRVCC cannot be performed, resulting in an increase in media delay of voice switching. If the protocol is not recommended to employ the SCCAS to process the resource reservation, it could be seen from the above analysis that, in fact, a setup of the media session of the switch call cannot be guaranteed before the resource of the switch call is successfully reserved. As a result, a signaling is successfully switched in the process but the switch eventually failed, reducing the satisfaction of the user experience.

In an embodiment of the present disclosure, there is provided an access switch function (ATCF) device for performing a resource reservation processing method for a single radio voice call continuity (SRVCC) switch, so as to avoid that the eSRVCC process switch processing cannot be performed if SCCAS processes the resource reservation, resulting in an increase in media delay of voice switching. If the SCCAS does not process the resource reservation, a signaling is successfully switched in the process but the switch eventually failed, reducing the satisfaction of the user experience.

In an embodiment of the present disclosure, there is provided a resource reservation processing method for a single radio voice call continuity switch, including: receiving, by an access switch function device (ATCF), a single radio voice call continuity (SRVCC) switch request, wherein the single radio voice call continuity switch request includes resource reservation information, and the access switch function device (ATCF) is an access transfer control function device or an emergency access transfer function device; and performing, by the access switch function device, resource reservation processing when determining that resource reservation processing is required according to the resource reservation information.

In an embodiment of the present disclosure, there is further provided an access switch function device which is an access transfer control function device or an emergency access transfer function device, and includes: a receiving module configured to receive a single radio voice call continuity switch request including resource reservation information; and a processing module configured to perform resource reservation processing when determining that resource reservation processing is required according to the resource reservation information.

In an embodiment of the present disclosure, there is further provided a computer storage medium for storing computer executable instructions, wherein when the computer executable instructions are configured to perform the foregoing resource reservation processing method for SRVCC switch.

In an embodiment of the present disclosure, there is further provided a computer readable storage medium for storing computer executable instructions, wherein the computer executable instructions implement the above resource reservation processing method for the single radio voice call continuity switch when being executed.

Advantageous effects are as follows:
In the resource reservation processing method for SRVCC switch, the access switch function device and the storage medium according to the embodiments of the present disclosure, the access switch function device (the access switch function device is an access transfer control function device (ATCF device) or emergency access transfer function device (EATF device)) receives a single radio voice call continuity (SRVCC) switch request including resource reservation information; and the ATCF device or the EATF device performs resource reservation processing when determining that resource reservation processing is required according to the resource reservation information in the SRVCC switch request. That is, in the embodiments of present disclosure, the ATCF device or the EATF device may implement the resource reservation. Therefore, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

Other aspects will be apparent upon reading and understanding the drawings and detailed description.

### BRIEF DESCRIPTION OF THE DRAWINGS

FIG. 1 is a flowchart schematically showing a resource reservation processing method for a single wireless voice call continuity switch according to a first embodiment of the present disclosure;
FIG. 2 is a flowchart schematically showing a resource reservation processing process according to the first embodiment of the present disclosure;
FIG. 3 is a block diagram schematically showing an access switch function device according to a second embodiment of the present disclosure;
FIG. 4 is a schematic diagram of a processing flow of resource reservation for an ATCF media anchored call state switch according to a third embodiment of the present disclosure;
FIG. 5 is a schematic diagram of a processing flow of resource reservation for an ATCF media unanchored call state switch according to the third embodiment of the present disclosure;
FIG. 6 is a schematic diagram of a processing flow of resource reservation for an ATCF media anchored session-in-ringing state switch according to the third embodiment of the present disclosure;
FIG. 7 is a schematic diagram of a processing flow of resource reservation for an EATF media anchored call state switch according to the third embodiment of the present disclosure;
FIG. 8 is a schematic diagram of a processing flow of resource reservation for an EATF media unanchored call state switch according to the third embodiment of the present disclosure; and
FIG. 9 is a schematic diagram of a processing flow of resource reservation for an EATF media anchored session-in-ringing state switch according to the third embodiment of the present disclosure.

### DETAILED DESCRIPTION OF THE EMBODIMENTS

Embodiments of the present disclosure will be described below with reference to the accompanying drawings.

### First Embodiment:

The access switch function device in this embodiment may be an access transfer control function device (ATCF device) or an emergency access transfer function device (EATF device), and eSRVCC process switch processing may be implemented by the access switch function device. In one example, the ATCF device may receive a Single Ration Voice Call Continuity (SRVCC) switch request from an eMSC (Enhanced Mobile Switching Center); the EATF device may receive the SRVCC switch request from an I-CSCF (Interrogating Call Session Control Function) device.

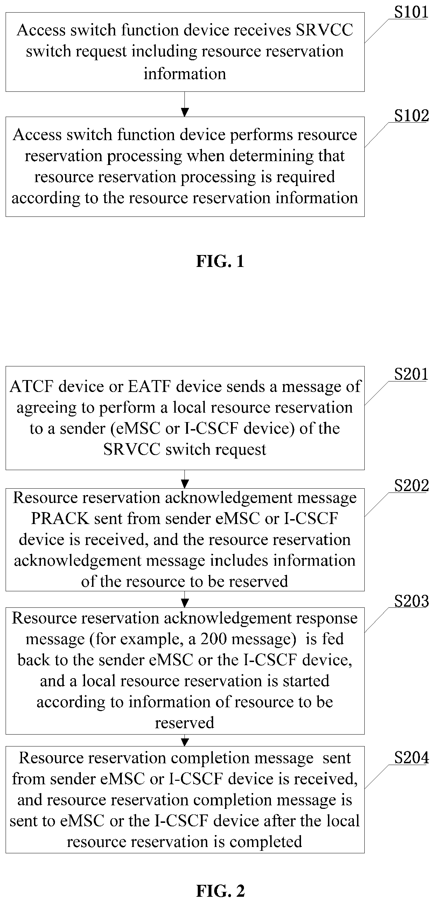

As shown in FIG. 1, the resource reservation processing method for the single radio voice call continuity switch according to this embodiment may include steps S101 to S102.

At step S101, an access switch function device receives an SRVCC switch request including resource reservation information.

As described above, the access switch function device in this embodiment may be an ATCF device or an EATF device, and the SRVCC switch request may be sent from the eMSC or the I-CSCF device.

In an example, the resource reservation information may include identifier information of whether resource reservation is required and information of whether the resource reservation is completed. In this example, for the ATCF device or the EATF device supporting the resource reservation, the SRVCC switch request of a switch call initiated by the eMSC or the I-CSCF device may carry a "Require" identifier to request for the resource reservation, and may carry a real resource reservation condition through SDP (Session Description Protocol), such as whether a current resource is reserved or not.

At step S102, the access switch function device performs a resource reservation processing when determining that resource reservation processing is required according to the resource reservation information.

In other words, after receiving the SRVCC switch request, the ATCF device or the EATF device may determine that resource reservation processing is required and perform subsequent resource reservation processing when the SRVCC switch request carries the identifier information (for example, "Require") that requires the resource reservation and the current resource reservation is determined to be uncompleted by the SDP. Since the resource reservation may be implemented by the ATCF device or the EATF device, instead of only using the SCCAS to process the resource reservation according to relevant protocols, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

It can be understood that the process of the resource reservation processing performed by the ATCF device or the EATF device may be flexibly performed according to a negotiation mechanism (for example, one negotiation or two negotiation) adopted by both communication parties. In an example, the both communication parties adopt a negotiation mechanism of two negotiations, for example. At this time, as shown in FIG. 2, the process of the resource reservation processing performed by the ATCF device or the EATF device may include steps S201 to S204.

At step S201, the ATCF device or the EATF device sends a message of agreeing to perform a local resource reservation to a sender (eMSC device or I-CSCF device) of SRVCC switch request.

In an example, the ATCF device or the EATF device may send a 183 message to the sender (eMSC device or I-CSCF device) of SRVCC switch request to inform the eMSC device or the I-CSCF device to agree to perform the local resource reservation processing. In one example, a field of a=conf:qs remote sendrecv in the 183 message may ensure that the SRVCC switch is not completed before the resource reservation is completed.

After receiving the 183 message, the eMSC device or the I-CSCF device may send a resource reservation acknowledgement message to the ATCF device or the EATF device, wherein the resource reservation acknowledgement message may be a temporary acknowledgement message PRACK, and in one example, the PRACK may carry a media type of resource to be eventually reserved. At this point, a current state of a called party has been known, and resources can be reserved.

At step S202, the resource reservation acknowledgement message PRACK sent from the sender eMSC device or the I-CSCF device is received, wherein the resource reservation acknowledgement message may include information of the resource to be reserved.

At step S203, a resource reservation acknowledgement response message (for example, a 200 message) is fed back to the sender eMSC device or the I-CSCF device, and the local resource reservation is started according to the information of resource to be reserved.

At step S204, a resource reservation completion message (UPDATE, carrying resource reservation completion SDP) sent from the sender eMSC device or I-CSCF device is received, and a resource reservation completion response message (which may also be implemented by the 200 message carrying the resource reservation condition SDP) is sent to the eMSC device or the I-CSCF device after the local resource reservation is completed.

In an example, when the access switch function device is an ATCF device, the resource reservation processing for several anchored call states will be described hereinafter.

Media offer/answer balances when an ATCF session of media anchored ATGW is in a call state. After the resource reservation is completed through the processes shown in FIGS. 1 and 2, the ATCF device may feedback the SRVCC switch request response message 200 to the sender eMSC of SRVCC switch request, and then may send the SRVCC switch request to a session call control function device (CSCF device) to complete the SRVCC switch.

When an ATCF session of media unanchored ATGW is in a call state (the SRVCC switch request is sent in this state), the ATCF device may send an SRVCC switch request to a corresponding CSCF device after receiving the resource reservation completion message UPDATE sent from the sender eMSC in the above step S204. When a packet switch domain call requested to be switched supports the resource reservation, the SRVCC switch request may include the resource reservation completion information,

The ATCF device may receive an SRVCC switch request response message fed back from the CSCF device, wherein the SRVCC switch request response message may include resource reservation information of the CSCF device.

After updating the local resource reservation information according to the resource reservation information of the CSCF device, the ATCF device may send an SRVCC switch request response message to the sender eMSC. At this time, the SRVCC switch request response message may include the updated resource reservation information.

When an ATCF session of media anchored ATGW is in a ringing state, the ATCF device may send an SRVCC switch request to the CSCF device to complete the SRVCC switch after the resource reservation is completed through the processes as shown in FIGS. 1 and 2.

When the access switch function device is an emergency access switch function device (EATF device), the resource reservation processing for several anchored call states will be described hereinafter.

The media offer/answer balances when the EATF device session of media anchored ATGW is in a call state. After the resource reservation is completed through the processes shown in FIGS. 1 and 2, the EATF device may feedback the SRVCC switch request response message 200 to the sender eMSC of SRVCC switch request.

When an EATF device session of media unanchored ATGW is in a call state or the EATF device session of the media anchored ATGW is in a ringing state, the EATF device may send an SRVCC switch request to a corresponding emergency session call control function device (E-CSCF device) after receiving the resource reservation completion message sent from the sender I-CSCF device, wherein when a call requested to be switched supports the resource reservation, the SRVCC switch request may also include a SDP of the resource reservation completion information;

The EATF device may receive the SRVCC switch request response message fed back from the session call control function device, wherein the SRVCC switch request response message may include the SDP of the resource reservation information of the E-CSCF device;

After updating the local resource reservation information according to the resource reservation information of the E-CSCF device, the EATF device may send an SRVCC switch request response message to the sender, wherein the SRVCC switch request response message may include the SDP of the updated resource reservation information.

It can be seen that, in this embodiment, the ATCF device or the EATF device may implement the resource reservation for various anchored call states. Therefore, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

### Second embodiment:

In the embodiment, there is provided an access switch function device. The access switch function device is an access switch function device (ATCF device) or an emergency access conversion transfer device (EATF device), and eSRVCC process switch processing may be implemented by the access switch function device. In one example, the ATCF device may receive a Single Ration Voice Call Continuity (SRVCC) switch request from an eMSC (Enhanced Mobile Switching Center); the EATF device may receive the SRVCC switch request from an I-CSCF (Interrogating Call Session Control Function) device.

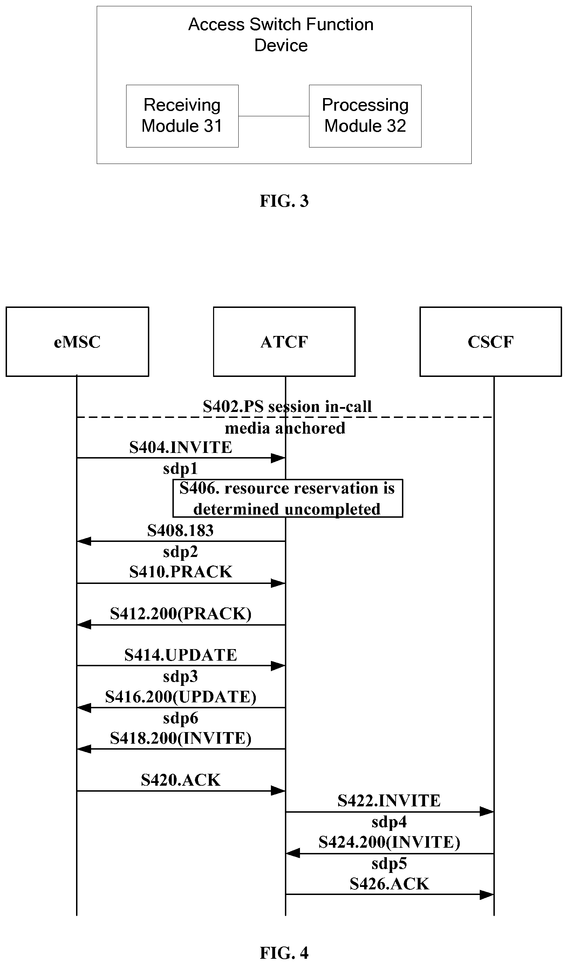

Optionally, as shown in FIG. 3, the access switch function device (i.e., the ATCF device or the EATF device) may include a receiving module 31 and a processing module 32.

The receiving module 31 is configured to receive an SRVCC switch request including resource reservation information.

As described above, the access switch function device in this embodiment may be an ATCF device or an EATF device, and the SRVCC switch request received by the receiving module 31 may be sent from the eMSC device or the I-CSCF device.

The processing module 32 is configured to perform resource reservation processing when determining that the resource reservation processing is required according to the resource reservation information.

In an example, the resource reservation information may include identifier information of whether resource reservation is required and information of whether the resource reservation is completed. In this example, for the ATCF device or the EATF device supporting the resource reservation, the SRVCC switch request of a switch call initiated by the eMSC device or the I-CSCF device may carry a "Require" identifier to request for resource reservation, and may carry a real resource reservation condition through SDP (Session Description Protocol), such as whether the current resource is reserved or not. The processing module 32 may be further configured to determine that the resource reservation processing is required and perform subsequent resource reservation processing, when the SRVCC switch request carries the identifier information (for example, "Require") requiring resource reservation and the current resource reservation is determined to be uncompleted by the SDP. Since the resource reservation may be implemented by the ATCF device or the EATF device, instead of only using the SCCAS to process the resource reservation according to relevant protocols, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

The process of the resource reservation processing performed by the processing module 32 may be flexibly performed according to the negotiation mechanism (for example, one negotiation or two negotiation) adopted by both communication parties. In one example, the both communication parties adopt a negotiation mechanism of two negotiations, for example. At this time, the processing module 32 may send a message of agreeing to perform a local resource reservation to a sender (eMSC device or I-CSCF device).of SRVCC switch request

In an example, the processing module 32 may be configured to send a 183 message to the sender eMSC device or I-CSCF device of SRVCC switch request to inform the eMSC device or the I-CSCF device to agree to perform the local resource reservation processing. In one example, a field of a=conf:qs remote sendrecv in the 183 message may ensure that the SRVCC switch is not completed before the resource reservation is completed.

After receiving the 183 message, the eMSC device or the I-CSCF device may send a resource reservation acknowledgement message to the ATCF device or the EATF device, wherein the resource reservation acknowledgement message may be a temporary acknowledgement message PRACK, and in one example, the PRACK may carry a media type of resource to be eventually reserved. At this point, a current state of a called party has been known, and resources can be reserved.

The processing module 32 may be further configured to receive a resource reservation acknowledgement message PRACK sent from the sender eMSC device or I-CSCF device, wherein the resource reservation acknowledgement message may include information of the resource to be reserved;

The processing module 32 may be further configured to feedback a resource reservation acknowledgement response message (for example, a 200 message) to the sender eMSC device or I-CSCF device, and start the local resource reservation according to the information of resource to be reserved;

The processing module 32 may be further configured to receive a resource reservation completion message (UPDATE, carrying resource reservation completion SDP) sent from the sender eMSC device or the I-CSCF device, and send a resource reservation completion response message (which may also be implemented by the 200 message carrying the resource reservation condition SDP) to the eMSC device or the I-CSCF device after the local resource reservation is completed.

In an example, when the access switch function device is an ATCF device, the resource reservation processing of the processing module 32 for several anchored call states will be described hereinafter.

Media offer/answer balances when an ATCF session of media anchored ATGW is in a call state. The processing module 32 may be configured to: after the resource reservation is completed through the above processes, feedback the SRVCC switch request response message 200 to the sender eMSC of SRVCC switch request, and then send the SRVCC switch request to a session call control function device (CSCF device) to complete the SRVCC switch.

When an ATCF session of media unanchored ATGW is in a call state (the SRVCC switch request is sent in this state), the processing module 32 may be configured to send an SRVCC switch request to a corresponding CSCF device after receiving the resource reservation completion message UPDATE sent from the sender eMSC, wherein when a packet switch domain call requested to be switched supports the resource reservation, the SRVCC switch request may include the resource reservation completion information;

The processing module 32 may be further configured to receive an SRVCC switch request response message fed back from the CSCF device, wherein the SRVCC switch request response message may include resource reservation information of the CSCF device;

The processing module 32 may be further configured to: after updating the local resource reservation information according to the resource reservation information of the CSCF device, send an SRVCC switch request response message to the sender eMSC. At this time, the SRVCC switch request response message may include the updated resource reservation information.

When an ATCF session of media anchored ATGW is in a ringing state, the processing module 32 may be further configured to send an SRVCC switch request to the CSCF device to complete the SRVCC switch after the resource reservation is completed through the above processes.

When the access switch function device is an emergency access switch function device (EATF device), the resource reservation processing of the processing module 32 for several anchored call states will be described hereinafter.

The media offer/answer balances when the EATF device session of media anchored ATGW is in a call state. The processing module 32 may be configured to: after the resource reservation is completed through the above processes, feedback the SRVCC switch request response message 200 to the sender eMSC of SRVCC switch request.

When an EATF device session of media unanchored ATGW is in a call state or the EATF device session of the media anchored ATGW is in a ringing state, the processing module 32 may be further configured to send an SRVCC switch request to a corresponding emergency session call control function device (E-CSCF device) after receiving the resource reservation completion message sent from the sender I-CSCF device, wherein when a call required to be switched supports the resource reservation, the SRVCC switch request may also include a SDP of the resource reservation completion information;

The processing module 32 may be further configured to receive the SRVCC switch request response message fed back from the session call control function device, wherein the SRVCC switch request response message may include the SDP of the resource reservation information of the E-CSCF device;

The processing module 32 may be further configured to: after updating the local resource reservation information according to the resource reservation information of the E-CSCF device, send an SRVCC switch request response message to the sender, wherein the SRVCC switch request response message may include the SDP of the updated resource reservation information.

The functions of the receiving module 31 and the processing module 32 in this embodiment may be implemented by a processor or controller in the ATCF device or the EATF device. In this embodiment, the ATCF device or the EATF device may implement the resource reservation for various anchored call states. Therefore, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

### Third embodiment:

In order to better understand the solutions of the present disclosure, by way of using the access transfer control function device (ATCF device) and the emergency access transfer function device (EATF device) as the access switch function device as examples, the resource reservation processing for several anchored and unanchored call states will be illustrated hereinafter.

Referring to FIG. 4, the figure shows a processing flow of resource reservation for an ATCF media anchored call state switch according to an optional embodiment of the present disclosure, including steps S402 to S426.

At step S402, a session of ATCF of media anchored ATGW is in a call state and the media offer/answer balances.

At step S404, the ATCF receives an SRVCC switch request from the left eMSC, wherein for the ATCF/EATF supporting the resource reservation, a switch call initiated by the eMSC carries "Require" resource reservation, and a SDP carries a real resource reservation condition.

At step S406, the ATCF determines a resource reservation condition of the switch request, and if the resource reservation is not completed, the subsequent steps are performed to complete the resource reservation process by the ATCF.

At steps S408∼S412, the ATCF sends, to the left eMSC, a 183 message carrying ATGW anchoring media and local resource reservation completion information.

At steps S414∼S416. the ATCF receives an UPDATE message from the left eMSC, and determines that the resource reservation is completed.

At steps S418∼S420, the ATCF sends a 200 message of a switch call response to the left eMSC.

At steps S422∼S426. the ATCF sends, to the right CSCF, an SRVCC switch request requesting to carry the resource reservation completion information according to a condition of the switched PS call supporting the resource reservation.

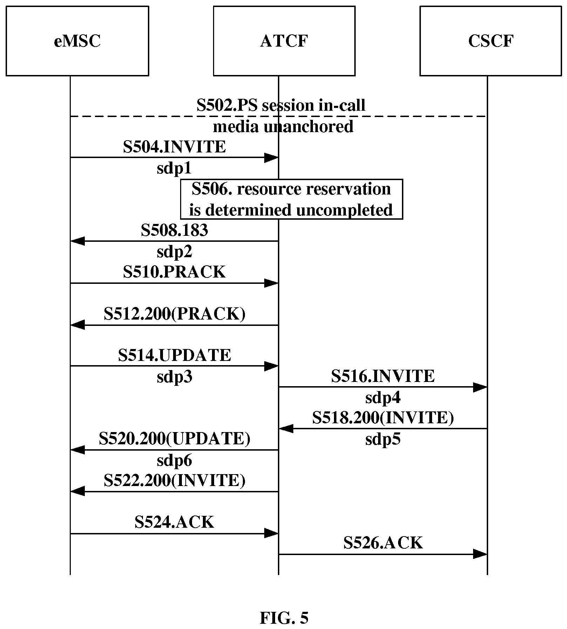

FIG. 5 is a processing flow of resource reservation for an ATCF media unanchored session-in-call state switch according to an optional embodiment of the present disclosure, including steps S502 to S526.

At step S502, a session of ATCF of media unanchored ATGW is in a call state, and the media offer/answer balances.

At step S504, the ATCF receives an SRVCC switch request from the left eMSC, wherein for ATCF/EATF supporting resource reservation, a switch call initiated by the eMSC carries "Require" resource reservation and a SDP carries a real resource reservation condition.

At step S506, the ATCF determines the resource reservation condition of the switch request, and if the resource reservation is not completed, the subsequent steps are performed to complete the resource reservation process by the ATCF.

At steps S508∼S512, the ATCF sends, to the left eMSC, a 183 message carrying a constructed fake media and the local resource reservation completion information.

At step S514, the ATCF receives an UPDATE message from the left eMSC, and determines that the resource reservation is completed.

At step S516, the ATCF sends, to the right CSCF, an SRVCC switch request requesting to carry the resource reservation completion information according to a situation of the switched PS call supporting the resource reservation.

At step S518, the ATCF receives, from the right CSCF, a 200 (INVITE) message carrying sdp5.

At step S520, the ATCF sends, to the left eMSC, a 200 (UPDATE) message carrying the sdp6 obtained after modifying the resource reservation information according to sdp5.

At step S522-S526, the ATCF sends the 200 (INVITE) message to the left eMSC, and transparently transmits an ACK response.

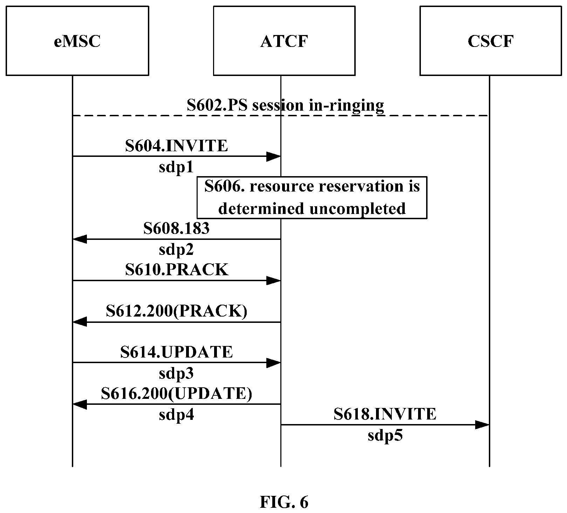

FIG. 6 is a processing flow of resource reservation for an ATCF-in-ringing state switch according to an optional embodiment of the present disclosure, including steps S602 to S618.

At step S602, a session of ATCF of media anchored ATGW is in a ringing state, and media offer/answer balances.

At step S604, the ATCF receives, from the left eMSC, an SRVCC switch request requesting to carry resource reservation information.

At step S606, the ATCF determines a resource reservation condition of the switch request, and if the resource reservation is not completed, the subsequent steps are performed to complete the resource reservation process by the ATCF.

At steps S608∼S612, the ATCF sends, to the left eMSC, a 183 message carrying the ATGW anchoring media and the local resource reservation completion information.

At steps S614-S616: The ATCF receives an UPDATE message from the left eMSC, and determines that the resource reservation is completed.

At step S618, the ATCF sends, to the right CSCF, an SRVCC switch request requesting to carry resource reservation completion information according to a condition of the switched PS call supporting the resource reservation.

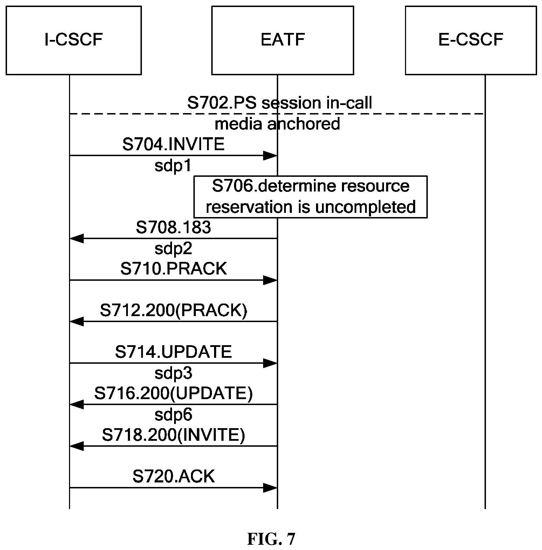

FIG. 7 is a processing flow of resource reservation for an EATF media anchored call state switch according to an optional embodiment of the present disclosure, including steps S702 to S720.

At step S702, a session of EATF of media anchored ATGW is in a call state, and the media offer/answer balances.

At step S704, the EATF receives an SRVCC switch request from the left I-CSCF, wherein for ATCF/EATF supporting resource reservation, a switch call initiated by the eMSC carries "Require" resource reservation and a SDP carries a real resource reservation condition.

At step S706, the EATF determines the resource reservation condition of the switch request, and if the resource reservation is not completed, the subsequent steps are performed to complete the resource reservation process by the EATF.

At steps S708∼S712, the EATF sends, to the left I-CSCF, a 183 message carrying the ATGW anchoring media and the local resource reservation completion information.

At steps S714∼S716, the EATF receives an UPDATE message from the left I-CSCF, and determines that the resource reservation is completed.

At step S718∼S720, the EATF sends a 200 message of a switch call response to the left I-CSCF.

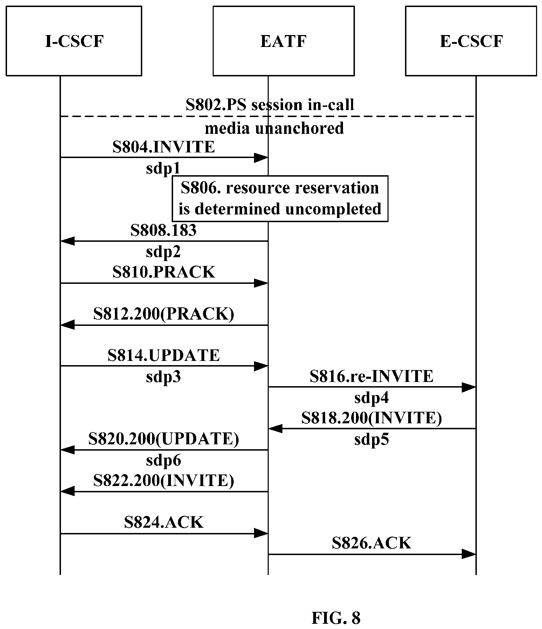

FIG. 8 is a processing flow of resource reservation for an EATF media unanchored session-in-call state switch according to an optional embodiment of the present disclosure, including steps S802 to SS826.

At step S802, a session of EATF of media unanchored ATGW is in a call state, and the media offer/answer balances.

At step S804, the EATF receives, from the left I-CSCF, an SRVCC switch request requesting to carry resource reservation information.

At step S806, the EATF determines a resource reservation condition of the switch request, and if the resource reservation is not completed, the subsequent steps are performed to complete the resource reservation process by the EATF.

At steps S808∼S812, the EATF sends, to the left I-CSCF, a 183 message carrying a constructed fake media and the local resource reservation completion information.

At step S814, the EATF receives an UPDATE message from the left I-CSCF, and determines that the resource reservation is completed.

At step S816, the EATF sends, to the right E-CSCF, a re-INVITE request requesting to carry the resource reservation completion information according to a condition of the switched PS call supporting the resource reservation.

At step SS818, the EATF receives a 200 (INVITE) message from the right E-CSCF carrying sdp5.

At step S820, the EATF sends, to the left I-CSCF, a 200 (UPDATE) message carrying sdp6 obtained after modifying the resource reservation information according to sdp5.

At steps S822∼S826, the EATF sends the 200 (INVITE) message to the left I-CSCF, and transparently transmits an ACK response;

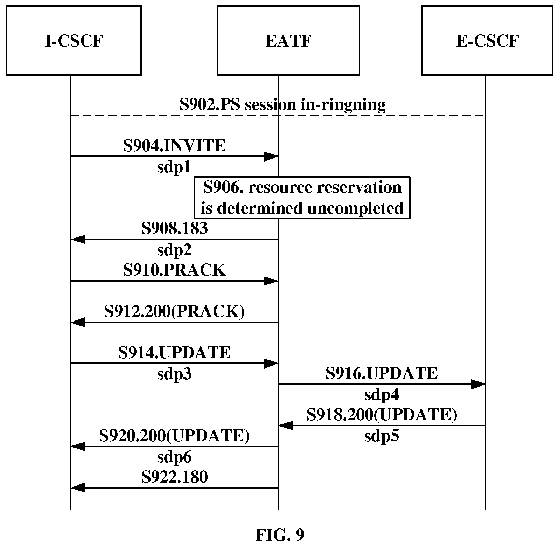

FIG. 9 is a processing flow of resource reservation for an EATF-in-ringing state switch according to an optional embodiment of the present disclosure, including steps S902 to S922.

At step S902, a session of EATF is in a ringing state, and the media offer/answer balances.

At step S904, the EATF receives, from the left I-CSCF, an SRVCC switch request requesting to carry resource reservation information.

At step S906, the EATF determines a resource reservation condition of the switch request, and if the resource reservation is not completed, the subsequent steps are preformed to complete the resource reservation process by the EATF.

At steps S908∼S912, the EATF sends, to the left I-CSCF, a 183 message carrying a constructed fake media and the local resource reservation completion information.

At step S914, the EATF receives an UPDATE message from the left I-CSCF, and determines that the resource reservation is completed.

At step S916, the EATF sends, to the right E-CSCF, an UPDATE request requesting to carry the resource reservation completion information according to a condition of the switched PS call supporting the resource reservation.

At step S918, the EATF receives, from the right E-CSCF, a 200 (UPDATE) message carrying sdp5.

At step S920, the EATF sends, to the left I-CSCF, a 200 (UPDATE) message carrying sdp6 obtained after modifying the resource reservation information according to sdp5.

At step S922, the EATF sends a 180 message to the left I-CSCF.

The ATCF device or the EATF device may implement the resource reservation for various anchored call states. Therefore, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

An embodiment of the present disclosure also provides computer readable storage medium storing computer executable instructions, wherein the computer executable instructions implement the resource reservation processing method for the single radio voice call continuity switch when being executed.

Those skilled in the art will appreciate that the above-described modules or steps of the embodiments of the present disclosure may be implemented by a general-purpose computing device, which may be centralized on a single computing device or distributed over a network of multiple computing devices. Alternatively, they may be implemented by program code executable by a computing device such that they may be stored in a computer storage medium (ROM/RAM, diskette, optical disk) and executed by the computing device. In some cases, the steps shown or described may be performed in a different order than that herein, or they may be separately fabricated into different integrated circuit modules, or a plurality of the modules or steps thereof may be implemented as a single integrated circuit module. Therefore, the present disclosure is not limited to any specific combination of hardware and software.

Those of ordinary skill in the art will appreciate that functional blocks/units in all or some of the steps, systems, and device in the above disclosed methods may be implemented as software, firmware, hardware, and suitable combinations thereof. In a hardware implementation, the division between functional modules/units mentioned in the above description does not necessarily correspond to the division of physical components; for example, one physical component may have multiple functions, or one function or step may be implemented together with several physical components. Some or all of the components may be implemented as software executed by a processor, such as a digital signal processor or microprocessor, or be implemented as hardware, or be implemented as an integrated circuit, such as an application specific integrated circuit. Such software may be distributed on a computer readable medium, which may include computer storage media (or non-transitory media) and communication media (or transitory media). As is well known to those of ordinary skill in the art, the term of computer storage medium includes volatile and non-volatile, removable and non-removable media, implemented in any method or technology for storing information (such as computer readable instructions, data structures, program modules or other data). The computer storage medium includes, but is not limited to, Random Access Memory (RAM), Read-Only Memory (ROM), and Electrically Erasable Programmable Read-only Memory (EEPROM), Flash memory or other memory technology, compact disc read-only memory (CD-ROM), digital versatile disc (DVD) or other optical disc storage, magnetic cassette, magnetic tape, disk storage or other magnetic storage device, or any other medium configured to store the desired information and that can be accessed by the computer. Moreover, it is well known to those skilled in the art that communication media typically includes computer readable instructions, data structures, program modules, or other data in a modulated data signal, such as a carrier wave or other transport mechanism, and can include any information delivery medium.

A person skilled in the art can understand that modification or equivalent substitution of technical solutions of the present disclosure can be made without departing from the spirit and scope of the present disclosure, and should be included in the scope of the claims of the present disclosure.

### Industrial applicability

In the resource reservation processing method for SRVCC switch, the access switch function device and the storage medium according to the embodiments of the present disclosure, the access switch function device (the access switch function device is an access transfer control function device (ATCF device) or emergency access transfer function device (EATF device)) receives a single radio voice call continuity (SRVCC) switch request including resource reservation information; and the ATCF device or the EATF device performs resource reservation processing when determining that resource reservation processing is required according to the resource reservation information in the SRVCC switch request. That is, in the embodiments of present disclosure, the ATCF device or the EATF device may implement the resource reservation. Therefore, the eSRVCC process switch processing can be used to the reduce media delay of voice switching and improve the smoothness and real-time performance of voice switching, while avoiding as much as possible that the signaling is successfully switched in the process but the switch eventually failed, thereby improving the satisfaction of the user experience.

## Claims

1. A resource reservation processing method for single radio voice call continuity switch, comprising:
receiving, by an access switch function device, a single radio voice call continuity switch request, wherein the single radio voice call continuity switch request comprises resource reservation information, and the access switch function device is an access transfer control function device or an emergency access transfer function device; and
performing, by the access switch function device, resource reservation processing when determining that resource reservation processing is required according to the resource reservation information.

2. The resource reservation processing method for single radio voice call continuity switch according to claim 1, wherein
the resource reservation information comprises identifier information of whether resource reservation is required and information of whether the resource reservation is completed, and
the resource reservation processing method for single radio voice call continuity switch further comprises:
determining that the resource reservation processing is required in the case where the resource reservation is determined to be required according to the resource reservation information and a current resource reservation is not completed.

3. The resource reservation processing method for single radio voice call continuity switch according to claim 1 or 2, wherein the step of performing, by the access switch function device, resource reservation processing comprises:
sending to a sender of the single radio voice call continuity switch request a message of agreeing to perform a local resource reservation;
receiving a resource reservation acknowledgement message sent from the sender, wherein the resource reservation acknowledgement message comprises information of resource to be reserved; and
feeding back a resource reservation acknowledgement response message to the sender, and starting the local resource reservation according to the information of the resource to be reserved.

4. The resource reservation processing method for single radio voice call continuity switch according to claim 3, wherein
the access switch function device is the access transfer control function device, and
in the case where the single radio voice call continuity switch request is that a session of the access transfer control function device that is not anchored to an access transfer gateway is in a call state, the method further comprises:
sending the single radio voice call continuity switch request to a corresponding session call control function device after receiving the resource reservation completion message sent from the sender, wherein when a packet switch domain call requested to be switched supports the resource reservation, the single radio voice call continuity switch request comprises resource reservation completion information;
receiving a single radio voice call continuity switch request response message fed back from the session call control function device, wherein the single radio voice call continuity switch request response message comprises resource reservation information of the session call control function device; and
sending the single radio voice call continuity switch request response message to the sender after updating local resource reservation information according to the resource reservation information of the session call control function device, wherein the single radio voice call continuity switch request response message comprises the updated resource reservation information.

5. The resource reservation processing method for single radio voice call continuity switch according to claim 3, wherein
the access switch function device is the emergency access transfer function device, and
in the case where the single radio voice call continuity switch request is that a session of the emergency access transfer function device that is not anchored to an access transfer gateway is in a call state or the session of the emergency access transfer function device anchored to the access transfer gateway is in a ringing state, the method further comprises:
sending the single radio voice call continuity switch request to a corresponding emergency session call control function device after receiving the resource reservation completion message sent from the sender, wherein when the call requested to be switched supports the resource reservation, the single radio voice call continuity switch request comprises resource reservation completion information;
receiving a single radio voice call continuity switch request response message fed back from the emergency session call control function device, wherein the single radio voice call continuity switch request response message comprises resource reservation information of the emergency session call control function device; and
sending the single radio voice call continuity switch request response message to the sender after updating local resource reservation information according to the resource reservation information of the emergency session call control function device, wherein the single radio voice call continuity switch request response message comprises the updated resource reservation information.

6. An access switch function device, which is an access transfer control function device or an emergency access transfer function device, and comprises:
a receiving module configured to receive a single radio voice call continuity switch request, wherein the single radio voice call continuity switch request comprises resource reservation information; and
a processing module configured to perform resource reservation processing when determining that resource reservation processing is required according to the resource reservation information.

7. The access switch function device according to claim 6, wherein
the resource reservation information comprises identifier information of whether resource reservation is required and information of whether the resource reservation is completed; and
the processing module is further configured to determine that the resource reservation processing is required in the case where the resource reservation is determined to be required according to the resource reservation information and a current resource reservation is not completed.

8. The access switch function device according to claim 6 or 7, wherein
the processing module is configured to
send to a sender of the single radio voice call continuity switch request a message of agreeing to perform a local resource reservation,
receive a resource reservation acknowledgement message sent from the sender, wherein the resource reservation acknowledgement message comprises information of resource to be reserved, and
feedback a resource reservation acknowledgement response message to the sender and start the local resource reservation according to the information of the resource to be reserved.

9. The access switch function device according to claim 8, wherein
the access switch function device is the access transfer control function device, and
in the case where the single radio voice call continuity switch request is that a session of the access transfer control function device that is not anchored to an access transfer gateway is in a call state, the processing module is further configured to:
send the single radio voice call continuity switch request to a corresponding session call control function device after receiving the resource reservation completion message sent from the sender, wherein when a packet switch domain call requested to be switched supports the resource reservation, the single radio voice call continuity switch request comprises resource reservation completion information;
receive a single radio voice call continuity switch request response message fed back from the session call control function device, wherein the single radio voice call continuity switch request response message comprises resource reservation information of the session call control function device; and
send the single radio voice call continuity switch request response message to the sender after updating local resource reservation information according to the resource reservation information of the session call control function device, wherein the single radio voice call continuity switch request response message comprises the updated resource reservation information.

10. The access switch function device according to claim 8, wherein
the access switch function device is the emergency access transfer function device, and
in the case where the single radio voice call continuity switch request is that a session of the emergency access transfer function device that is not anchored to an access transfer gateway is in a call state or the session of the emergency access transfer function device anchored to the access transfer gateway is in a ringing state, the processing module is further configured to:
send the single radio voice call continuity switch request to a corresponding emergency session call control function device after receiving the resource reservation completion message sent from the sender, wherein when the call requested to be switched supports the resource reservation, the single radio voice call continuity switch request comprises resource reservation completion information;
receive a single radio voice call continuity switch request response message fed back from the emergency session call control function device, wherein the single radio voice call continuity switch request response message comprises resource reservation information of the emergency session call control function device; and
send the single radio voice call continuity switch request response message to the sender after updating local resource reservation information according to the resource reservation information of the emergency session call control function device, wherein the single radio voice call continuity switch request response message comprises the updated resource reservation information.
